# EUROPÄISCHE PATENTSCHRIFT

(11) **EP 0 899 509 B1**
(45) Veröffentlichungstag und Bekanntmachung des Hinweises auf die Patenterteilung: **02.11.2000**
(21) Anmeldenummer: 97890141.1
(22) Anmeldetag: 18.07.1997
(51) Int. Cl.: F23G 5/027, F23G 5/44

(54) **Verfahren und Anlage zur thermischen Behandlung von Abfallstoffen und/oder -Fraktionen**
Process and plant for the thermal treatment of waste and or fractions thereof
Procédé et installation de traitement thermique de déchets et/ou de fragments de déchets

(43) Veröffentlichungstag der Anmeldung: 03.03.1999
(73) Patentinhaber: Amand Entwicklungs GmbH, 40235 Düsseldorf (DE)
(72) Erfinder: Dietze, Rainer, Dr.Ing., 09599 Freiberg/Sachsen (DE); Göschl, Reinhard, Ing., 2823 Pitten (AT); Schliephake, Kai, Dipl.-Ing., 09599 Freiberg/Sachsen (DE)
(74) Vertreter: Itze, Peter, Dipl.-Ing.

(56) Entgegenhaltungen:
- DE-A- 4 132 107
- DE-A- 4 202 321
- US-A- 3 745 942
- US-A- 4 944 236
- US-A- 5 245 113

## Beschreibung

Die Erfindung bezieht sich auf ein Verfahren und eine Anlage zur thermischen Behandlung von Abfallstoffen und/oder -fraktionen, in welcher die Abfallstoffe und/oder -fraktionen thermisch inertisiert werden.

Bei einer durch die AT 399 864 B bekanntgewordenen Ausbildung dieser Art werden die Abfallstoffe und/oder -fraktionen in einem Tunnelglühofen in Normalatmosphäre thermisch behandelt, wobei eine Behandlungstemperatur von etwa 1600°C angewandt wird (siehe auch das Dokument US-A-4 944 236). Dadurch wird das Produkt in einen Schmelzzustand übergeführt und hat am Ausgang des entsprechenden Ofens glasartigen Charakter, wodurch eine Deponierung nach allen derzeitigen Vorschriften problemlos möglich wird. Bei dieser bekannten Ausbildung ist es erforderlich, einen entsprechend konstruierten Ofen zu verwenden, in welchem die für eine Glühbehandlung erforderlichen Konditionen herrschen.

Der Erfindung liegt die Aufgabe zugrunde, eine Anlage der eingangs genannten Art zu schaffen, mit welcher die Abfallstoffe und/oder -fraktionen, gegebenenfalls auch in kleineren Verarbeitungsmengen, in normalen Brennöfen, z.B. Ziegelbrennöfen, behandelt werden können, u.zw. sowohl im Wechselbetrieb mit einer Ziegelproduktion als auch im Kombinationsbetrieb.

Erfindungsgemäß wird diese Aufgabe dadurch gelöst, daß die Abfallstoffe und/oder -fraktionen in abgeschlossenen, mit Gasaustauschöffnungen versehenen Transporteinheiten unter Sauerstoffmangelbedingungen bei herkömmlichen Brenntemperaturen von Keramik, Ziegeln oder anderen Tonwaren - insbesondere etwa 950°C thermisch umgesetzt werden. Durch diese sauerstoffarme thermische Umsetzung wird eine Oxidation der Abfallstoffe und/oder -fraktionen vermieden, bzw. sogar teilweise eine Reduktion erzielt, was insbesondere bei Metallen vorteilhaft ist, weil damit eine Oxidation in eine lösliche Form vermieden ist, so daß die Metalle bei Ablagerung auf einer Deponie nicht mehr ausgewaschen werden können.

Vorteilhafterweise können die entstehenden Gase nach ihrem Austritt aus den Einheiten während des thermischen Umsetzungsvorganges im Ofeninnenraum verbrannt werden, wodurch der Heizwert dieser Gase direkt für die zum thermischen Umsetzen nötige Energiezufuhr herangezogen werden können.

Eine vorteilhafte Anlage zur Durchführung des erfindungsgemäßen Verfahrens, zur thermischen Behandlung von Abfallstoffen und/oder -fraktionen, mit einem herkömmlichen Brennofen für Keramik, Ziegel oder anderen Tonwaven gegebenenfalls mit einer zusätzlichen Luftzufuhr ist gekennzeichnet durch abgeschlossene, mit Gasaustauschöffnungen in den Wandungen aufweisenden Transporteinheiten für die Abfallstoffen und/oder -fraktionen. Damit wird erreicht, daß innerhalb der Transporteinheiten die erforderliche sauerstoffarme Atmosphäre herrscht, die eine thermische Umsetzung des Gutes in reduzierender Atmosphäre ermöglicht, wobei dann die bei der thermischen Umsetzung entstehenden Gase durch die zusätzliche Frischluft im Brennofen in der Brennzone verbrannt werden. Es hat sich dabei gezeigt, daß durch derartige Öfen eine Ofentemperatur von etwa 950°C ausreicht, um die gewünschte thermische Umsetzung der Produkte vorzunehmen. Eine Oxidation insbesondere von Metallen oder Schwermetallen, die aufgrund der höheren Oxidationsstufe im Falle einer Ablagerung, Deponierung od.dgl. in das Grundwasser ausgeschwemmt werden können, wird damit gleichfalls vermieden.

Bei Verwendung eines Ziegelbrennofens können die Transporteinheiten je ein den Ziegeltransportwagenfahrgestellen entsprechendes Fahrgestell und einen oder mehrere Aufnahmebehälter für die zu behandelnden Abfallstoffe und/oder -fraktionen aufweisen. Damit wird ermöglicht, die Abfallstoffe gemeinsam mit dem Brennen von Ziegeln oder auch gesondert zu behandeln, ohne in jedem Fall eine konstruktive Änderung des Ofens vornehmen zu müssen. Der Ziegelbrennofen kann lediglich mit einer entsprechenden Frischluftzufuhr zusätzlich versehen sein.

In einer ersten Variante der Aufnahmebehälter kann der Aufnahmebehälter durch einen kreisförmigen oder vieleckigen Querschnitt aufweisenden Zylindermantel gebildet sein, welcher mit den Gasaustauschöffnungen versehen und am oberen Ende abschließbar ist, wobei vorzugsweise zwei insbesondere konzentrisch ineinander angeordnete, kreisförmigen oder vieleckigen Querschnitt aufweisende Zylindermäntel vorgesehen sind und der Behälter damit ringförmigen Grundriß aufweist, und wobei vorzugsweise sowohl der Außenmantel als auch der Innenmantel mit Gasaustauschöffnungen versehen sind. Die im Inneren des Aufnahmebehälters entstehenden Gase werden auf Grund der auftretenden Volumsvergrößerung aus dem Behälter durch die Gasaustauschöffnungen ausgetrieben und verbrennen aufgrund der in der Brennzone herrschenden Temperatur an den Gasaustauschöffnungen im Ofeninneren. Wenn zwei konzentrische Zylindermäntel in der angeführten Ausbildung vorhanden sind, hat sich gezeigt, daß die bei der thermischen Umsetzung entstandenen Gase sowohl am äußeren als auch am inneren Mantel des Behälters verbrennen.

Bei einer anderen Ausführungsvariante können mehrere wannenförmige Aufnahmebehälter übereinander vorgesehen sein, die unter Belassung eines Gasraumes mit einem Deckel oder einer umgekehrten Wanne abgeschlossen sind, wobei vorzugsweise sowohl in der Wandung des wannenförmigen Aufnahmebehälters als auch im Deckel bzw. der umgekehrten Wanne Gasaustauschöffnungen vorgesehen sind. Die Gase treten einerseits in den Gasraum oberhalb des Behandlungsgutes und den Deckel bzw. der umgekehrten Wanne über die dort befindlichen Gasaustauschöffnungen und anderseits die im Bereich der Guthöhe befindlichen Gasaustauschöffnungen aus dem Behandlungsgut und dem Aufnahmebehälter aus und verbrennen an der Außenseite der Behälter im Bereich der Gasaustauschöffnungen.

Vorteilhafterweise kann der Brennofen als Tunnelofen ausgebildet sein, wobei die Frischluftzufuhr in der Abkühlzone angeordnet ist und wobei am Beginn der Abkühlzone eine Abzugsleitung für die mit Ofenatmosphäre vermischte Frischluft vorgesehen ist, die zu einem mit Brennerabgasen beschickten Wärmetauscher für das Erhitzen des Frischluftgemisches führt, von welchem eine Rückführungsleitung zum Beginn der Vorwärmzone des Brennofens führt. Dadurch wird erreicht, daß die zugeführte Frischluft einerseits das bereits gebrannte Gut abkühlt und anderseits selbst aufgewärmt wird, um bereits in vorgewärmter Form durch den Wärmetauscher auf jene Temperatur gebracht werden kann, in welcher sie zu Beginn der Vorwärmzone zur Aufwärmung der zu behandelnden Materialien herangezogen werden kann. Diese zusätzliche Frischluftzufuhr in der Vorwärmzone ist deshalb vorteilhaft, weil damit erreicht werden kann, daß in der Ofenatmosphäre genug Sauerstoff vorhanden ist, um eine Verbrennung der bei der thermischen Umsetzung entstandenen, aus den Aufnahmebehältern austretenden Gase zu ermöglichen.

Der Erfindungsgegenstand wird nachstehend anhand der Zeichnung näher erläutert, welche ein auf einen Ziegelbrennofen abgestelltes Ausführungsbeispiel zur Verarbeitung von Rottegut wiedergibt. In analoger Weise könnten natürlich auch andere Abfallstoffe und/oder -fraktionen verarbeitet werden, die durch einen Glühvorgang bei Temperaturen eines herkömmlichen Brennofens inertisierbar sind.

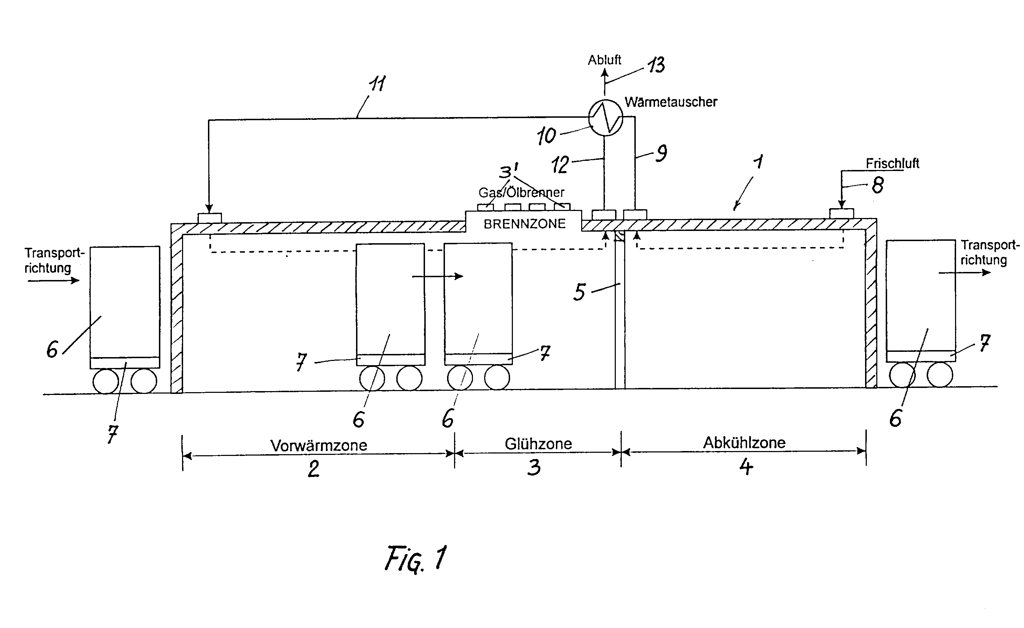

Fig. 1 zeigt schematisch einen Längsschnitt durch den Ziegelbrennofen, wobei nur einige der darin befindlichen Transportwagen angedeutet sind.

Fig. 2 zeigt einen Aufriß einer ersten Ausführungsvariante eines für die Verglühung von Rottegut konzipierten Transportwagens.

Fig. 3 ist ein Horizontalschnitt gemäß Linie III-III der Fig. 2.

Fig. 4 zeigt im Aufriß eine zweite Ausführungsvariante für einen ebenfalls für die Verglühung von Rottegut konzipierten Transportwagen.

Fig. 5 ist ein parallel zur Bildebene der Fig. 4 geführter Vertikalschnitt durch den Transportwagen.

Mit 1 ist der Ziegelbrennofen bezeichnet, der in drei Zonen, nämlich eine Vorwärmzone 2, eine mit Gas- oder Ölbrennern 3' befeuerte thermische Umsetzungszone 3 und eine Abkühlzone 4 unterteilt ist. Zwischen Umsetzungszone und Abkühlzone kann gewünschtenfalls eine an der Wand umlaufende, vorspringende Rippe 5 vorgesehen sein, die den Durchtrittsquerschnitt für die Transportwagen 6 soweit verringert, daß die Transportwagen gerade noch durchführbar sind. Die Transportwagen weisen Fahrgestelle 7 auf, über welche sie auf in der Zeichnung nicht dargestellte Schienen durch den Ofen durchgeführt werden.

Mit 8 ist beim vorliegenden Ausführungsbeispiel eine am Ende der Abkühlzone 4 vorgesehene Frischluftzufuhr bezeichnet, über welche Frischluft in das Innere des Ofens in der Abkühlzone zugeführt wird. Diese Frischluft vermischt sich mit der Ofenatmosphäre und wandert entlang der strichliert angedeuten Linie zur Abzugsleitung 9, wo mittels eines nicht dargestellten Ventilators das Frischluft-Ofenatmosphäre-Gemisch abgezogen und einem Wärmetauscher 10 zugeführt wird. Vom Wärmeaustauscher 10 wird das vorgewärmte Frischluft-Ofenatmosphäre-Gemisch am Beginn der Vorwärmzone 2 in den Ofen eingebracht. Der Wärmetauscher 10 ist durch die Abgase aus der Brennzone über die Leitung 12 beaufschlagt, wobei die im Wärmetauscher abgekühlten Abgase über die Abluftleitung 13 in die Atmosphäre bzw. über entsprechende Filter abgeführt werden.

Das Prinzip des Ziegelbrennofens umfaßt den An- und Abtransport von Ziegeln auf Rollwagen, wobei die Rollwagen in und durch den Ofen Mann an Mann durchgeschoben werden. Die angeführte Luftführung innerhalb des Ziegelbrennofens ist für die Funktion der vorliegenden erfindungsgemäßen Anlage vorteilhaft, weil die Frischluft einerseits als Kühlmittel für das Gut und anderseits als zusätzlicher Sauerstofflieferant für die Verbrennung dient. Falls allerdings durch eine andere Grundkonstruktion des Ofens bzw. der Brenner in der Umsetzungszone des Ofens noch genügend Sauerstoff für die Verbrennung der aus den Aufnahmebehältern ausgetretenen Gase vorhanden ist, kann auf eine gesonderte Frischluftzufuhr verzichtet werden.

Um Abfallstoffe und/oder -fraktionen, welche beispielsweise aus einem biologischen Rotte- oder Vergärungsprozeß oder einem Abwasserklärverfahren anfallen, verarbeiten zu können, sind spezielle Transportwagen vorgesehen, welche den Fahrgestellen 7 analoge Fahrgestelle 7' aufweisen. Der Aufbau der Transportwagen 6 ist dabei so gestaltet, daß auf den Fahrgestellen 7' Aufnahmebehälter 14 vorgesehen sind. Diese Aufnahmebehälter 14 sind geschlossen und weisen in der Wandung Schlitze 15, 16 auf, die zum Gasaustausch zwischen Behälterinnenraum und Ofeninnenraum dienen.

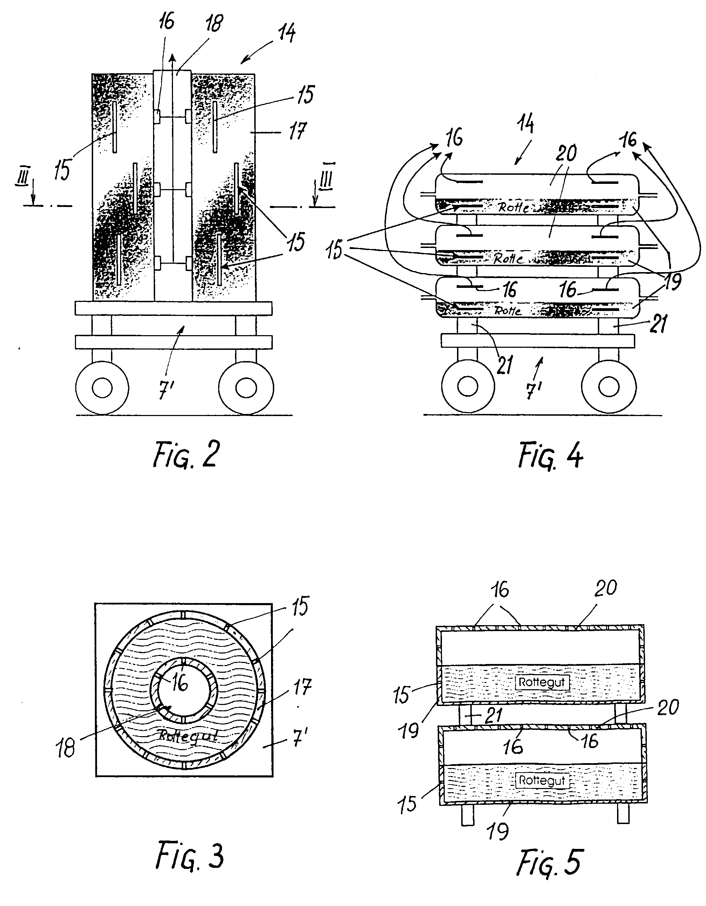

Bei dem in Fig. 2 und 3 dargestellten Ausführungsbeispiel ist der Aufnahmebehälter 14 durch zwei in vorliegenden Fall konzentrisch angeordnete Zylindermäntel gebildet, nämlich durch einen äußeren Zylindermantel 17 und einen inneren Zylindermantel 18, sodaß ein im Grundriß ringförmiger Aufnahmeraum für Rottegut gebildet wird. Wie Versuche gezeigt haben, treten durch die als Gasaustauschöffnungen wirkenden Schlitze 15, 16 die bei der thermischen Umsetzung entstandenen Gase aus dem Aufnahmebehälter 14 aus bzw. tritt das Frischluft-Ofenatmosphäre-Gemisch in den Aufnahmebehälter 14 ein.

Dargestellt ist eine kreiszylindrische Ausbildung der Zylindermäntel, es kann jedoch auch ein Zylinder mit polygonalem Querschnitt vorgesehen sein. Des weiteren könnten auch anstelle eines einzigen zylindrischen Rohres mehrere vertikale Rohre eingesetzt sein, die ihrerseits dann die Schlitze 16 für den Gasaustausch tragen. Bei großen Grundflächen könnten gegebenenfalls auch zusätzlich zu einem zylindrischen Innenrohr 18 mehrere mit Schlitzen für den Gasaustausch versehene Rohre über den Ringquerschnitt verteilt eingesetzt sein, bzw. könnte unter gewissen Bedingungen (geringer Durchmesser des Außenzylinders od.dgl.) der innere Zylinder auch zur Gänze entfallen.

Bei der Ausführungsvariante gemäß Fig. 4 und 5 sind mehrere Aufnahmebehälter 14 übereinander angeordnet, wobei jeder der Aufnahmebehälter aus einer unteren Aufnahmewanne 19 und einer dicht aufgesetzten Deckwanne bzw. einem Deckel 20 gebildet sein kann. Die den Gasaustausch zwischen dem Inneren des Aufnahmebehälters 14 und dem Ofeninnenraum ergebenden Schlitze 15, 16 sind sowohl in der unteren Aufnahmewanne 19 als auch in der Deckwanne 20 bzw. dem Deckel vorgesehen. Die übereinander angeordneten Behälter 14 sind dabei auf vertikalen Streben 21 gelagert.

Zum Betrieb der erfindungsgemäßen Anlage werden die Aufnahmebehälter 14 der Transportwagen 6 mit dem zu behandelnden Rottegut befüllt, wonach dann diese mit den Aufnahmebehältern 14 versehenen Transportwagen 6 entweder direkt hintereinander oder in Verbindung mit mit Ziegeln beladenen Transportwagen in den Ziegelbrennofen geschoben bzw., falls der Ziegelbrennofen als Ringofen ausgebildet ist, in die Ringkammer eingebracht werden. Die mit den Aufnahmebehältern 14 versehenen Transportwagen durchlaufen dann die normalen Temperaturzonen des Ziegelbrennofens 1, nämlich die Vorwärmzone, die thermische Umsetzungszone und die Abkühlzone. Dabei werden die Behälter 14 von außen derart erhitzt, daß das im Inneren befindliche Material zur sauerstoffarmen Umsetzung auf Temperaturen bis zu 950°C erhitzt wird. Durch diese Erhitzung wird aufgrund der Druck- und Zugverhältnisse im Brennofen 1 in der Vorwärmzone das über die Leitung 11 zugeführte vorgewärmte Frischluft-Ofenatmosphäre-Gemisch in die Aufnahmebehälter 14 eingesaugt, wobei es im Inneren der Aufnahmebehälter 14 zu einer sauerstoffarmen thermischen Umsetzung des Rottematerials kommt. Der wesentliche Unterschied zu einer herkömmlichen Verbrennung des Rottegutes liegt dabei in der Menge des zugeführten Sauerstoffes, welche Menge dafür ausschlaggebend ist, ob das zu behandelnde Rottegut bzw. der darin enthaltene Kohlenstoff entweder zu Kohlenmonoxid oder zu Kohlendioxid oxidiert wird. Auch gegenüber einem herkömmlichen Verglühen ist der Unterschied der thermischen Umsetzung in sauerstoffarmem Milieu gegeben, wobei das Rottegut räumlich von der Ofenatmosphäre getrennt getrocknet und thermisch umgesetzt wird und die bei der thermischen Umsetzung entstehenden Gase von dem Rottegut getrennt verbrannt werden. Bei den bei der erfindungsgemäßen thermischen Umsetzung entstehenden Gasen handelt es sich um eine Teiloxidation zu Kohlenmonoxid. Auf diese Art werden weniger Schadstoffe oxidiert, was eine Verbesserung der gasförmigen Emission und der Anhebung der Qualität des behandelten Rottegutes erbringt, da beispielsweise in dem Rottegut enthaltene Metallionen nicht soweit oxidiert werden, daß sie im Falle der Deponierung/Ablagerung durch Regen oder Sickerwasser aus den Rückständen ausgewaschen werden können.

Es handelt sich bei der vorliegenden Rotteverarbeitung also um eine sauerstoffarme thermische Umsetzung der organischen Kohlenwasserstoffverbindungen, wobei die gasförmigen Verbindungen in einem anschließenden Nachverbrennungsprozeß zerstört werden, wobei die Abgase fan den Abgasschlitzen bzw. Abgasbohrungen 16 der Aufnahmebehälter 14 bzw. durch die Abgasführung im Ziegelbrennofen selbst verbrannt werden und damit der in den Abgasen noch enthaltene Heizwert für die Erhitzung des Gutes in der Glühzone 3 verwertet werden kann.

Die Frischluftführung innerhalb des Brennofens erfolgt, wie schon angedeutet, über die Frischluftzufuhrleitung 8, wobei sich die eingeführte Frischluft mit der Ofenatmosphäre in der Abkühlzone 4 vermischt und damit sowohl die Atmosphäre als auch die darin befindlichen Transportwagen 6 abkühlt. Die bei vorliegendem Ausführungsbeispiel gezeigten, vorspringenden Rippen 5 dienen dabei dazu, daß durch den jeweiligen, im Bereich dieser Rippen 5 befindlichen Wagen 6 der Durchtrittsquerschnitt für den Austausch zwischen Ofenatmosphäre der Glühzone und der Abkühlzone soweit verringert wird, daß das Frischluft-Ofenatmosphäre-Gemisch über die Leitung 9 abgesaugt werden kann, ohne daß es zu einem Einsaugen der in der Glühzone entstehenden Brennerabgase kommt. Da die Hauptreaktion bezüglich des Oxidierens der aus den Aufnahmebehältern austretenden Gase in der Glühzone erfolgt ist, bleibt das Frischluft-Ofenatmosphäre-Gemisch nahezu unverändert in der Zusammensetzung und wird nach Abziehen über die Leitung 9 im Wärmeaustauscher 10 vorgewärmt, wobei der Wärmeaustauscher über die Abgasleitung 12 mit Verbrennungabgasen beaufschlagt wird. Die Verbrennungsabgase werden dabei abgekühlt und über die Abluftleitung 13 entweder entsprechenden Filtern oder, wenn die Gase bereits unbedenklich sind, direkt in die Abluft entlassen. Das vorgewärmte Frischluft-Ofenatmosphäre-Gemisch wird über die Leitung 11 zu Beginn der Vorwärmzone in den Ofen eingebracht, womit die entsprechende Sauerstoffmenge einerseits für den Umsetzungsvorgang innerhalb der Aufnahmebehälter 14 und anderseits auch für die Brenner innerhalb der Glühzone zugeführt werden.

Bei der Ausführungsvariante der Aufnahmebehälter 14 gemäß Fig. 2 und 3 wird das zu behandelnde Rottegut in den Raum zwischen den beiden Zylindermänteln 17, 18 eingefüllt und der Behälter oben verschlossen. Während des Behandlungsvorganges in der Vorwärm- und Glühzone erfolgt die bereits beschriebene thermische Umsetzung des Gutes innerhalb des Aufnahmebehälters, wobei die dabei entstehenden Gase durch die Schlitze 15, 16 aus dem Aufnahmebehälter 14 in das Ofeninnere austreten und dort aufgrund der Temperatur innerhalb der Glühzone verbrennen. Die Größe und die Anzahl der zum Gasaustausch dienenden Schlitze 15, 16 oder Bohrungen in der Außenwand des rohrförmigen Behälters bestimmen die Qualität des während des thermischen Umsetzungsprozesses entstehenden kohlenmomoxidhaltigen Abgases und wird in Abhängigkeit des zu behandelnden Rottegutes bestimmt. Maßgebend für die Zahl ist der Kohlenstoffgehalt im zu behandelnden Rottegut. Dies bedeutet, daß Transportwagen 6 mit unterschiedlichen Aufnahmebehältern 14 vorgesehen sein können, u.zw. dahingehend, daß die Zahl und die Größe der zum Gasaustausch dienenden Schlitze 15 bzw. 16 im Außenmantel 17 bzw. Innenmantel 18 zwischen den einzelnen Transportwagen 6 variiert, sodaß je nach Art des Rottesgutes, ein entsprechend ausgestatteter Wagen gewählt werden kann.

Bei der Ausführungsvariante 2 der Aufnahmebehälter 14 gemäß den Fig. 4 und 5 wird das zu behandelnde Rottegut in die untere Aufnahmewanne 19 eingebracht, die mit Gasaustauschöffnungen (-schlitzen) 15 versehen ist. Danach wird die untere Aufnahmewanne 19 mit einem Deckel 20 bzw. einer umgekehrten Deckwanne verschlossen, wobei die Deckel bzw. Deckwanne 20 ebenfalls mit Gasaustauschöffnungen (-schlitzen) 16 versehen sind. Auch in diesem Fall ist die Größe und die Anzahl der Gasaustauschschlitze 15 bzw. 16 für den Ablauf der Reaktion des thermischen Umsetzungsvorganges maßgebend. Die während der Nachverbrennung des kohlenmonoxydreichen Abgases zwischen den einzelnen Aufnahmebehältern 14 entstehende Wärme wird für die Erwärmung des Rottegutes durch Wärmeübertragung durch die Wand des Aufnahmebehälters 14 genützt.

Das durch die erfindungsgemäße Anlage behandelte Rottegut ist thermisch derartig inertisiert, daß es ohne Gefahr auf herkömmlichen Deponien gelagert werden kann.

Die über die Leitung 13 austretenden Abgase können, wie schon angeführt, über einen Filter zur Reinigung der staubförmigen Emissionen geleitet werden. Durch Zugabe von Additiven kann eine Ausscheidung anorganischer metallischer Schadstoffe, wie z.B. Schwermetalle, Chlor und Fluor, einfach erreicht werden, wonach dann das Abgas den gesetzlichen Anforderungen entspricht und in die Atmosphäre abgelassen werden kann.

## Patentansprüche

1. Verfahren zur thermischen Behandlung von Abfallstoffen und/oder -fraktionen, bei welchem diese thermisch inertisiert werden, dadurch gekennzeichnet, daß die Abfallstoffe und/oder -fraktionen in abgeschlossenen, mit Gasaustauschöffnungen versehenen Transporteinheiten unter Sauerstoffmangelbedingungen bei herkömmlichen Brenntemperaturen von Keramik, Ziegeln oder anderen Tonwaren, insbesondere etwa 950°C, thermisch umgesetzt werden.

2. Verfahren nach Anspruch 1, dadurch gekennzeichnet, daß die entstehenden Gase nach ihrem Austritt aus den Einheiten während des Umsetzungsvorganges im Ofeninnenraum verbrannt werden.

3. Anlage zur Durchführung des Verfahrens nach Anspruch 1 oder 2 zur thermischen Behandlung von Abfallstoffen und/oder -fraktionen, mit einem herkömmlichen Brennofen für Keramik, Ziegel oder anderen Tonwaren, gegebenenfalls mit einer zusätzlichen Luftzufuhr, gekennzeichnet durch abgeschlossene, Gasaustauschöffnungen (15, 16) in den Wandungen (17, 18; 19, 20) aufweisende Transporteinheiten (6) für die Abfallstoffe und/oder -fraktionen.

4. Anlage nach Anspruch 3, dadurch gekennzeichnet, daß bei Verwendung eines Ziegelbrennofens die Transporteinheiten (6) je ein den Ziegeltransportwagenfahrgestellen (7) entsprechenden Fahrgestell (7') und einen oder mehrere Aufnahmebehälter (14) für die zu behandelnden Abfallstoffe und/oder -fraktionen aufweisen.

5. Anlage nach Anspruch 4, dadurch gekennzeichnet, daß der Aufnahmebehälter (14) durch einen kreisförmigen oder vieleckigen Querschnitt aufweisenden Zylindermantel (17) gebildet ist, welcher mit den Gasaustauschöffnungen (15) versehen und am oberen Ende abschließbar ist, wobei vorzugsweise zwei insbesondere konzentrisch ineinander angeordnete, kreisförmigen oder vieleckigen Querschnitt aufweisende Zylindermäntel (17, 18) vorgesehen sind und der Behälter (14) damit ringförmigen Grundriß aufweist, und wobei vorzugsweise sowohl der Außenmantel (17) als auch der Innenmantel (18) mit den Gasaustauschöffnungen (15, 16) versehen sind.

6. Anlage nach Anspruch 4, dadurch gekennzeichnet, daß als Aufnahmebehälter (14) mehrere wannenförmige Aufnahmebehälter (19) übereinander vorgesehen sind, die unter Belassung eines Gasraumes mit einem Deckel oder einer umgekehrten Wanne (20) abgeschlossen sind, wobei vorzugsweise sowohl in der Wandung des wannenförmigen Aufnahmebehälters (19) als auch im Deckel bzw. der umgekehrten Wanne (20) Gasaustauschöffnungen (15, 16) vorgesehen sind.

7. Anlage nach einem der Ansprüche 3 bis 6, dadurch gekennzeichnet, daß der Brennofen (1) als Tunnelofen ausgebildet ist, wobei die Frischluftzufuhr (2) in der Abkühlzone (4) angeordnet ist, und wobei am Beginn der Abkühlzone (4) eine Abzugsleitung (9) für die mit Ofenatmosphäre vermischte Frischluft vorgesehen ist, die zu einem mit Brennerabgasen beschickten Wärmetauscher (10) für das Erhitzen des Frischluftgemisches führt, von welchem eine Rückführleitung (11) zum Beginn der Vorwärmzone (2) des Brennofens (1) führt.

## Claims

1. Method of thermally treating waste materials and/or fractions in which they are thermally rendered inert, characterised in the waste materials and/or fractions are thermally converted in closed transport units provided with gas exchange openings under oxygen-deficient conditions at conventional firing temperatures of ceramic materials, bricks or other earthenware, particularly about 950°C.

2. Method as claimed in Claim 1, characterised in that the gases which are produced are burnt in the interior of the furnace during the conversion process after their discharge from the units.

3. Installation for carrying out the method as claimed in Claim 1 or 2 for thermally treating waste materials and/or fractions including a conventional firing furnace for ceramic material, bricks or other earthenware, optionally with an additional air supply, characterised by closed transport units (6) for the waste materials and/or fractions having gas exchange openings (15, 16) in the walls (17, 18; 19, 20).

4. Installation as claimed in Claim 3, characterised in that when using a brick firing furnace the transport units (6) have a respective wheeled frame (7') corresponding to the brick transport carriage wheeled frames (7) and one or more receptacles (14) for the waste materials and/or fractions to be treated.

5. Installation as claimed in Claim 4, characterised in that the receptacle (14) is defined by a cylindrical shell (17) having a circular or polygonal cross-section which is provided with the gas exchange openings (15) and is closable at the upper end, whereby preferably two cylindrical shells (17, 18) having a circular or polygonal cross-section and particularly arranged concentrically within one another, are provided and the container (14) thus has an annular cross-section and whereby preferably both the outer shell (17) and the inner shell (18) are provided with the gas exchange openings (15, 16).

6. Installation as claimed in Claim 4, characterised in that a plurality of trough-like receptacles (19) are provided above one another, which constitute the receptacle (14) and are closed with a lid or an inverted trough leaving a gas space, whereby preferably gas exchange openings (15, 16) are provided both in the wall of the trough-like receptacles (19) and in the lid or inverted trough (20).

7. Installation as claimed in one of Claims 3 to 6, characterised in that the firing furnace (1) is constructed in the form of a tunnel furnace, the fresh air supply (2) being arranged in the cooling zone (4) and an exhaust line (9) being provided at the beginning of the cooling zone (4) for the fresh air mixed with furnace gases which leads to a heat exchanger (10) charged with burner exhaust gases for heating the fresh air mixture and from which a return line (7) leads to the beginning of the preheating zone (2) of the firing furnace (1).

## Revendications

1. Procédé de traitement thermique de déchets et/ou de fragments de déchets, au cours duquel ceux-ci sont inertisés thermiquement, caractérisé en ce que les déchets et/ou les fragments de déchets sont transformés thermiquement dans des unités de transport fermées, pourvues d'ouvertures pour échanges gazeux, dans des conditions d'insuffisance d'oxygène, aux températures habituelles de cuisson de la céramique, des briques ou d'autres articles en terre, en particulier à approximativement 950°C.

2. Procédé selon la revendication 1, caractérisé en ce que les gaz produits, après s'être échappés des unités au cours du processus de transformation, sont brûlés à l'intérieur du four.

3. Installation permettant la mise en oeuvre du procédé selon la revendication 1 ou 2 de traitement thermique de déchets et/ou de fragments de déchets, comprenant un four classique pour céramique, briques ou autres articles en terre, équipé le cas échéant d'une amenée d'air supplémentaire, caractérisée par des unités de transport (6) fermées, présentant des ouvertures pour échanges gazeux (15, 16) ménagées dans les parois (17, 18 ; 19, 20), ces unités étant destinées aux déchets et/ou aux fractions de déchets.

4. Installation selon la revendication 3, caractérisée en ce que, lorsqu'est utilisé un four à briques, les unités de transport (6) présentent chacune un châssis (7'), correspondant aux châssis (7) des chariots transporteurs de briques, et un ou plusieurs récipients (14) destinés aux déchets et/ou aux fragments de déchets à traiter.

5. Installation selon la revendication 4, caractérisée en ce que le récipient (14) est formé par une enveloppe cylindrique (17) présentant une section circulaire ou polygonale, pourvue d'ouvertures pour échanges gazeux (15) et susceptible d'être obturée à son extrémité supérieure, deux enveloppes cylindriques (17, 18) de section circulaire ou polygonale, Insérées en particulier concentriquement l'une dans l'autre, étant prévues de préférence et le récipient (14) présentant de ce fait une projection horizontale annulaire, et l'enveloppe extérieure (17), ainsi que l'enveloppe intérieure (18) étant, de préférence, pourvues des ouvertures pour échanges gazeux (15, 16).

6. Installation selon la revendication 4, caractérisée en ce que, pour servir de récipient (14), sont prévus plusieurs récipients (19) en forme de cuves placés les uns au-dessus des autres, qui sont obturés par un couvercle ou une cuve renversée (20), en laissant subsister une chambre à gaz, des ouvertures pour échanges gazeux (15, 16) étant de préférence prévues aussi bien dans la paroi du récipient (19) en forme de cuve que dans le couvercle ou la cuve renversée (20).

7. Installation selon l'une des revendications 3 à 6, caractérisée en ce que le four (1) est conformé en four tunnel, l'amenée d'air frais (2) étant prévue dans la zone de refroidissement (4), et une conduite d'évacuation (9) destinée à l'air frais mélangé à l'atmosphère du four, étant prévue au début de la zone de refroidissement (4) et menant à un échangeur de chaleur (10), alimenté en gaz d'échappement du brûleur, servant à chauffer le mélange d'air frais, d'où part une conduite de recyclage (11) menant au début de la zone de préchauffage (2) du four (1).
